# EUROPÄISCHE PATENTSCHRIFT

(11) **EP 1 259 572 B1**
(45) Veröffentlichungstag und Bekanntmachung des Hinweises auf die Patenterteilung: **06.07.2005**
(21) Anmeldenummer: 00991120.7
(22) Anmeldetag: 22.12.2000
(51) Int. Cl.: C09D 7/12, C09D 5/02, C09C 1/30

(54) **WÄSSRIGES BESCHICHTUNGSMATERIAL MIT SCHMUTZ- UND WASSERABWEISENDER WIRKUNG, VERFAHREN ZU SEINER HERSTELLUNG UND DESSEN VERWENDUNG**
AQUEOUS COATING MATERIAL HAVING AN ANTISOILING AND WATER-REPELLING EFFECT, METHOD FOR THE PRODUCTION THEREOF AND ITS USE
MATERIAU DE REVETEMENT AQUEUX A EFFET ANTISALISSURE ET HYDROFUGE, PROCEDE PERMETTANT DE LE PRODUIRE ET UTILISATION

(30) Priorität: 27.12.1999 DE 19963187
(43) Veröffentlichungstag der Anmeldung: 27.11.2002
(73) Patentinhaber: DEUTSCHE AMPHIBOLIN-WERKE VON ROBERT MURJAHN GmbH + Co. KG, 64372 Ober-Ramstadt (DE)
(72) Erfinder: RADEMACHER, Ingo, 64807 Dieburg (DE); BISTER, Erhard, 64846 Gross-Zimmern (DE); BEFURT, Uwe, 64372 Ober-Ramstadt (DE); KABEL, Roger, 63342 Seeheim-Jugenheim (DE)
(74) Vertreter: Pfenning, Meinig & Partner GbR
(86) Internationale Anmeldenummer: PCT/DE2000/004646
(87) Internationale Veröffentlichungsnummer: WO 2001/048098

(56) Entgegenhaltungen:
- EP-A- 0 224 978
- DE-A- 4 402 370
- DE-A- 4 419 234
- US-A- 3 846 356
- PATENT ABSTRACTS OF JAPAN vol. 1998, no. 11, 30. September 1998 (1998-09-30) & JP 10 168393 A (MITSUBISHI RAYON CO LTD), 23. Juni 1998 (1998-06-23)

## Beschreibung

Die Erfindung betrifft ein waßriges Beschichtungsmaterial nach dem Oberbegriff des Anspruchs 1, Verfahren zu dessen Herstellung sowie dessen Verwendung. Dabei eignet sich die erfindungsgemäße Losung insbesondere als äußere Schutzschicht auf verschiedensten Oberflächen und Untergrunden wegen der verbesserten schmutz- und insbesondere der zusatzlich vorhandenen wasserabweisenden Wirkung.

Sie kann ohne weiteres auf unterschiedlichen Baustoffoberflächen, wie z.B. Kunststoffen, Natursteinen, Metallen, Naturstoffen, Farbschichten, Lackschichten, mineralisch gebundenen Baustoffen, aber auch auf Holz aufgebracht werden und dort die gewunschten Wirkungen erreicht werden.

Bekanntermaßen tritt bei den verschiedensten Baustoffoberflächen infolge der Einwirkung von Warme und/oder Feuchtigkeit eine Oberflachenerweichung auf, die üblicherweise als thermoplastische bzw. hydroplastische Eigenschaft bezeichnet wird. An einer entsprechend erweichten Oberflache konnen anhaftende Schmutzpartikel besonders stark eingebunden und teilweise nach Trocknung und Sonneneinstrahlung einbrennen. Demzufolge ist eine Entfernung dieser Partikel mit mechanischer Krafteinwirkung, durch Beregnung oder durch den Einfluß der Winderosion nahezu unmöglich.

Eine weitere wesentliche Aufgabe von Baustoffoberflächen, ist die Verhinderung des Eintritts von Wasser, wobei diese Aufgabe mit herkömmlichen Schutzschichten auf organischer bzw. auch anorganischer Basis zumindest befriedigend gelost ist. Diese herkömmlichen Beschichtungsmittel weisen aber in der Regel nur bedingt auch schmutzabweisende Wirkung auf.

Nach dem Stand der Technik sind daher verschiedene Wege beschritten worden, um auch verschmutzungsarme Oberflächen zur Verfügung zu stellen. Dabei handelt es sich um die Verwendung von spezialstrukturierten, hochgeordneten und hydrophobierten Oberflächen und zum anderen um nanoskalige hydrophile Oberflächen, mit denen auch eine Verringerung der Verschmutzung erreicht werden sollte.

So ist in WO 96/04123 beschrieben, Oberflächen als regelmäßige Anordnung von Höhen und Tiefen im Abstand von mehreren Mikrometern sowie mit relativen Höhen im Maßstab mehrerer Mikrometer auszubilden, um den sogenannten Lotoseffekt nachzuahmen. Hierzu ist eine sehr hohe und strenge definierte Ordnung der Oberflachenmorphologie und Oberflächentopologie erforderlich, um den gewünschten Effekt, also ein erhöhtes Maß an Schmutzabweisung zu erreichen. Diese, wie in WO 96/04123 beschriebenen Strukturen, müssen demzufolge eine regelmäßige Oberflächenmorphologie im Mikrometerbereich aufweisen und sind demzufolge nur bedingt, und wenn dann aufwendig herstellbar.

Ein anderer Weg ist in DE 197 26 814 A1 beschrieben worden, um eine schmutzabweisende Beschichtung zu erhalten. Dabei sollen in einer solchen Beschichtung silikatische Partikel im Nanometerbereich enthalten sein. Mit der dort beschriebenen Lösung wird zwar eine relativ befriedigende schmutzabweisende Wirkung erreicht, der Schutz vor Eindringen von Wasser über eine solche Beschichtung ist aber nicht gegeben. Wird eine solche Beschichtung dann wieder mit einer Hydrophobierung oder Imprägnierung versehen, geht die schmutzabweisende Wirkung verloren, so dass beide gleichzeitig anzustrebende Wirkungen nicht erreicht werden können.

Die DE 44 02 370 A1 (D1) beschreibt pyrogen hergestellte Kieselsäuren, die an der Oberfläche silanisiert sind. Hierfür werden Trialkoxysilane eingesetzt. Das Verfahren wird dabei in der Weise durchgeführt, dass die Kieselsäure in einem Mischer vorgelegt wird, mit Wasser und anschließend mit den Organosilanen besprüht wird.

Die US 3,846,356 (D2) beschreibt die Silanisierung von Kieselsäure-Partikeln mit Trialkylsilylchloriden. Als Ausgangspartikel wird eine pyrogene Kieselsäure eingesetzt. Die Beschichtung erfolgt als Elektrodenposition in wässrigen Medien.

In der DE 44 19 234 A1 (D3) wird ein Verfahren zur Silylierung von anorganischen Oxiden, darunter auch Kieselsäure, beschrieben. Die Oberflächenmodifizierung erfolgt hier mit Organosilanen, die auch mit Halogenen substituiert sein können, und Polysiloxanen. Die Umsetzung erfolgt dabei in einem protischen Lösungsmittel, bevorzugt in Wasser und/oder niederen Alkoholen.

Die EP 0 224 378 A2 (D4) beschreibt die Beschichtung u.a. von mineralischen Silikaten mit einem Silikonpolymer. Die Beschichtung erfolgt hierbei dadurch, dass die Silikon-Komponente verdampft wird und anschließend aus der Dampfphase auf den Partikeln abgeschieden wird.

Es ist daher Aufgabe der Erfindung, ein Beschichtungsmaterial zur Verfügung zu stellen, das auf nahezu beliebigen Oberflächen, unabhängig von der Struktur der Oberfläche, aufgebracht werden kann und dort sowohl eine schmutz-, wie auch eine wasserabweisende Wirkung entfaltet.

Erfindungsgemäß wird diese Aufgabe mit einem Beschichtungsmaterial gemäß Anspruch 1, das mit einem Verfahren gemäß Anspruch 6 hergestellt werden kann, gelöst. Vorteilhafte Ausgestaltungsformen und Weiterbildungen der Erfindung ergeben sich mit den in den untergeordneten Ansprüchen enthaltenen Merkmalen.
Das erfindungsgemäße Beschichtungsmaterial verbindet die vorteilhafte, schmutzabweisende Wirkung von enthaltenen nanoskaligen Silikaten durch die erfindungsgemäße Hydrophobierung und/oder Oleophobierung der Oberfläche, beispielsweise durch Oberflächensilikonisierung der kolloidal verteilten Partikel, so dass zusätzlich auch wasserabweisende Wirkung er reicht werden kann. Die entsprechend behandelten sehr kleinen Partikel sind kleiner als 500 nm, vorteilhaft < 200 nm und liegen ganz besonders vorteilhaft im Bereich zwischen 5 bis 50 nm. Dabei soll unter dem Begriff Primärpartikelgröße, die Größe der Partikel verstanden werden, wie sie vor der erfindungsgemäß durchzuführenden Oberflächenbehandlung war.

Die Beschichtung kann vorteilhaft transparent sein, aber auch eingefärbt werden.

Nach Auftrag und Trocknung des Beschichtungsmaterials bildet sich infolge der nanoskaligen Struktur der kolloidalen Partikel eine entsprechende Oberflächenmorphologie aus, die zu der gewünschten schmutzabweisenden Wirkung führt, ohne dass besondere Anforderungen an die Oberflächenstruktur bezüglich Morphologie und Topologie gestellt werden müssen, wie dies bei der in WO 96/04123 beschriebenen Lösung der Fall ist.

Das erfindungsgemäße wässrige Beschichtungsmaterial ist normalerweise transparent bis leicht opak, kann aber auch durch Zugabe von Farbstoffen bzw. Pigmenten entsprechend eingefärbt werden.

Das erfindungsgemäße Beschichtungsmaterial kann außerdem organische Bindemittel, wie z.B. Polyacrylat, Styrolacrylate, Acrylatmischpolymere, Vinylacetat, Polyurethandispersion enthalten. Außerdem können andere Füll- oder Funktionsstoffe, wie Fungizide, Flammschutzmittel, Farbstoffe, Pigmente und/oder Füllstoffe, Dispergier- und Netzmittel, Entschäumer, Verdichter, Lösemittel und Emulgatoren enthalten sein.

Erfindungsgemäß wird ebenso die Verwendung eines Beschichtungsmaterials, wie es zuvor beschrieben wurde, als transparente oder eingefärbte schmutz- und wasserabweisende Schutzschicht auf unbeschichteten und/oder grundierten Baustoffoberflächen gelehrt. Hierzu gehört auch die Verwendung als schmutz- und wasserabweisende Schutzschicht, als Abschlussbeschichtung auf mineralisch, kunstharz-, naturharz-, kunststoffgebundenen Untergründen, Metall, Holz oder Kunststoff.

Ein erfindungsgemäßes wässriges Beschichtungsmaterial kann so hergestellt werden, dass synthetisches Schichtsilikat und kolloidale Kieselsäure durch Rühren in Wasser dispergiert werden. Das so erhaltene Hydrogel kann dann zur Oberflächenbehandlung der Partikel mit Silanen, Polysiloxanen, Silikonharzemulsionen, geeigneten perfluorierten Verbindungen, wie z.B. Fluorkohlenstoffsilan, derivatisierten Fluorkohlenstoffverbindungen mit Phosphat-, Sulfat- oder quartären Ammoniumverbindungen, reagieren und eine Oberflächensilikonisierung erreicht werden. Dabei können Reaktionen mit den einzelnen genannten Komponenten allein, aber auch Mischungen davon, die auch als Emulsionen zugesetzt werden können, ablaufen.

Bei der Reaktion kann ein alkalischer Katalysator verwendet werden, wobei es sich bei den Katalysatoren um wasserlösliche Silikonate, Alkalisilikate oder Alkalioxide sowie Mischungen davon handeln kann. Besonders geeignet als Katalysator ist Methylsilikonat.

Bei der Reaktion für die Oberflächenbehandlung der Silikatpartikel sollte ein Masseverhältnis von Schichtsilikat und kolloidaler Kieselsäure zu verwendeter Silikonharzemulsion von 1:20 bis 1:1 eingehalten werden. Bevorzugt liegt das Verhältnis im Bereich von 1:5 bis 1:1.

Der Masseanteil des eingesetzten alkalischen Katalysators sollte in Bezug zum Masseanteil der eingesetzten Silikonharzemulsion im Bereich von 1:10 bis 1:2 gehalten werden.

Bei einer möglichen Zugabe von organischem Bindemittel sollte dessen Masseanteil < als der Masseanteil der verwendeten Silikonharzemulsion, zumindest jedoch nicht größer als dieser sein.

Das erfindungsgemäße Beschichtungsmaterial kann mit den verschiedensten Verfahren, auf verschiedenen Untergründen aufgebracht werden, so ist neben dem manuellen Pinselauftrag auch ein Aufsprühen, Aufrakeln oder Aufspachteln ohne weiteres denkbar, wobei es ohne weiteres auf unbehandelte, wie auch auf Oberflächen, die bereits mit Schutzschichten z.B. einer Grundierung versehen sind, aufgebracht werden kann.

So kann das erfindungsgemäße Beschichtungsmaterial auf unbehandeltes Holz, Naturstein, mineralisch gebundene Baustoffe, wie Beton oder Außen- und Innenputz, Dachpfannen, die verschiedenen Kunststoffoberflächen sowie direkt auf Metall aufgebracht werden und nach dem Trocknen die beiden besonders gewünschten Wirkungen erreichen.

Die Reaktion, bei der die Oberflächenbehandlung der silikatischen Partikel erfolgt, sollte bei erhöhter Temperatur, vorzugsweise im Temperaturbereich zwischen 30 °C bis 50 °C, bevorzugt bei 40 °C über einen Zeitraum von mehreren Tagen erfolgen.

Auf mit einem erfindungsgemäßen Beschichtungsmaterial versehenen Oberflächen konnte die Trockendeposition von Flugaschestaub im Vergleich zu entsprechend nicht behandelten Oberflächenbereichen deutlich reduziert werden. Dieser Sachverhalt ist insbesondere bei der Verwendung für den Außenschutz von Gebäuden von Bedeutung, da die geographische Lage, die Ausrichtung eines Gebäudes und die Klimabedingungen nicht immer gewährleisten, dass sämtliche Flächenbereiche, und hier insbesondere Teile von Fassaden, beregnet werden, so dass die Staubablagerungen unter Dachüberständen, auf Fenstergesimsen und anderen regenabgewandten Seiten von Gebäuden durch Regenwasser zumindest teilweise nicht abgewaschen werden.

Das erfindungsgemäße Beschichtungsmaterial wirkt sich aber auch vorteilhaft bei der sogenannten Nassdeposition (d.h. Staubablagerungen auf betauten oder noch feuchten Untergründen) günstig aus, da hier insbesondere sich die vorteilhafte gemeinsame wasser- und schmutzabweisende Wirkung auswirkt.

Nachfolgend soll die Erfindung anhand von Ausführungsbeispielen näher erläutert werden.

### Beispiel 1 (dient nur zu Vergleichszwecken und fällt nicht in den Schutzbereich der vorliegenden Erfindung)

Zu 86,9 9 Wasser werden 4,1 g synthetisches Schichtsilikat, das unter dem Handelsnamen "Laponite RD" von der Firma Laporte kommerziell erhältlich ist, unter Rühren zugegeben und anschließend über einen Zeitraum von 10 min dispergiert. Im Anschluss daran werden 7,2 g Siliconharzemulsion, das unter dem Handelsnamen "BS 45" und von der Firma Wacker erhältlich ist und unmittelbar anschließend 1,4 g von Kaliummethylsiliconat, das unter der Bezeichnung "BS 15" von der Firma Wacker kommerziell erhältlich ist, zugegeben. Im Anschluss daran wird das Gemisch unter hoher Scherung weiter dispergiert. Der so erhaltene Ansatz wird dann über mehrere Tage gelagert, bis eine konstante Viskosität eingestellt ist. Das so erhaltene Produkt ist leicht weißlich und cremig und kann auf die verschiedensten Oberflächen aufgebracht und nach Trocknung die gewünschten Wirkungen entfalten.

Auf einer herkömmlichen Faserzementplatte wurde eine Untergrundvorbehandlung vorgenommen, wobei einmalig eine Dispersionsgrundierung, die durch zweimaligen Auftrag einer rissüberbrückenden Beschichtung überdeckt worden ist, aufgebracht werden. Nach einer Trocknungsphase über 24 h wurde die eine Hälfte der so vorbereiteten Faserzementplatte mit einem Beschichtungsmaterial gemäß Beispiel 1 bestrichen, wobei die Auftragsmenge bei ca. 60 g/m² lag. Die andere Hälfte der Faserzementplatte blieb ansonsten unbehandelt.

Nach einer weiteren Trockenphase von 24 h wurde die gesamte Oberfläche der Faserzementplatte, also die ansonsten unbehandelte und die erfindungsgemäß behandelte Oberfläche, mit mittels einem 100 µm-Sieb abgesiebter Flugasche verschmutzt. Der infolge der Gravitationskraft auf die horizontal ausgerichtete Faserzementplatte fallende Flugaschestaub, deckt diese dann entsprechend ab. Nach einer vorgegebenen Einwirkzeit von einigen Minuten, wurde die Faserzementplatte dann aufgestellt, so dass nicht anhaftende Partikel abfallen konnten. Durch leichtes Aufstoßen der Faserzementplatte auf dem Boden, konnten weitere Flugaschestaubpartikel abfallen, wobei auf diese Art und Weise die Winderosion von auf Oberflächen deponiertem Schmutz simuliert werden kann. Es konnte festgestellt werden, dass die Trockendeposition auf dem erfindungsgemäß beschichteten Flächenteil der Faserzementplatte deutlich geringer als auf dem unbehandelten Oberflächenteil war.

Unter Verwendung einer herkömmlichen Pflanzenspritze, mit der entionisiertes Wasser auf die Oberfläche der Faserzementplatte gerichtet worden ist, wurde die Wirkung auch bei Beregnung von Oberflächen simuliert. Auf diese Art und Weise konnten auch die letzten Schmutzreste von auf der mit dem erfindungsgemäßen Beschichtungsmaterial versehenen Flächenteil der Faserzementplatte entfernt werden, wohingegen der übrige Flächenteil deutliche Schmutzspuren aufwies.

Auf die noch feuchte Oberfläche der Faserzementplatte wurde erneut eine Flugaschedeposition, wie bereits beschrieben, vorgenommen, um eine Nassdeposition zu simulieren. Im Nachgang dazu wurde ebenfalls, wie bereits erwähnt, mit entmineralisiertem Wasser die gesamte Oberfläche der Faserzementplatte abgewaschen. Bei der nachfolgenden Prüfung bestätigten sich die zuvor ermittelten Ergebnisse, wobei festzustellen war, dass auf dem nahezu unbehandelten Oberflächenanteil der Faserzementplatte der Verschmutzungsgrad nach mehreren solcher durchgeführter Zyklen noch erheblich angestiegen ist, als dies bei dem Flächenanteil, der erfindungsgemäß beschichtet worden ist, der Fall war.

Mittels Pinselapplikation wurde ein Beschichtungsmaterial gemäß Beispiel 1 auf die Oberfläche einer Gelbsandsteinplatte aufgetragen, wobei der Auftrag mit ca. 75 g/m² erfolgte. Das Beschichtungsmaterial trocknet nicht sichtbar auf und zeigt auch nach mehreren Tagen eine geringe Benetzung durch Wassertropfen. Als Verschmutzungstest wurde die bereits beschriebene Trockendeposition mit Flugaschestaub und nachträglicher Abregnung durchgeführt, wobei auf dem unbehandelten Oberflächenteil der Gelbsandsteinplatte deutlich stärkere Verdunklung durch Schmutz auftrat, als auf den Flächenbereichen, die mit dem Beschichtungsmaterial beschichtet worden sind.

Eine ast- und harzfreie Kiefernholzplatte wurde hälftig mit einem Beschichtungsmaterial gemäß Beispiel 1, dem auf 100 g eine Farbpaste mit einer Masse von 0,1 g Fakunülgrün, als Farbpaste, die von der Firma BASF erhältlich ist, zugegeben und dispergiert. Das entsprechend getönte Beschichtungsmaterial konnte nunmehr eine schmutz- und wasserabweisende Lasur, die auf eine Hälfte der Kiefernholzplatte aufgetragen und getrocknet werden. Der Auftrag erfolgte dabei mit einer Menge von 80 g/m².

Diese Holzplatte wurde nach mehrtägiger Laborlagerung, den bereits beschriebenen Trocken- und Nassdepositionstests unterzogen, wobei sich, wie auch bei den anderen Versuchen, die gleichen Ergebnisse einstellten und sich sowohl die wasser-, wie auch die verbesserte schmutzabweisende Wirkung bestätigten.

## Patentansprüche

1. Wässriges Beschichtungsmaterial mit schmutz- und wasserabweisender Wirkung, in dem synthetische Schichtsilikate und kolloidale Kieselsäure, mit Primärpartikelgrößen, jeweils kleiner als 500 nm enthalten sind,
**dadurch gekennzeichnet,**
**dass** die kolloidal verteilten Partikel an ihren Oberflächen hydrophobiert und/oder oleophobiert sind.

2. Beschichtungsmaterial nach Anspruch 1, **dadurch gekennzeichnet, dass** die Primärpartikelgröße jeweils kleiner als 200 nm ist.

3. Beschichtungsmaterial nach Anspruch 1 oder 2,
**dadurch gekennzeichnet, dass** die Primärpartikelgröße im Bereich zwischen 5 bis 50 nm liegt.

4. Beschichtungsmaterial nach einem der Ansprüche 1 bis 3, **dadurch gekennzeichnet, dass** zusätzlich ein organisches Bindemittel enthalten ist.

5. Beschichtungsmaterial nach einem der Ansprüche 1 bis 4, **dadurch gekennzeichnet, dass** zusätzlich Fungizide, Flammschutzmittel, Farbstoffe, Pigmente und/oder Füllstoffe, Dispergier- und Netzmittel, Entschäumer, Verdicker, Lösemittel und Emulgatoren enthalten sind.

6. Verfahren zur Herstellung eines wässrigen Beschichtungsmaterials, mit schmutz- und wasserabweisender Wirkung, in dem synthetische Schichtsilikate und kolloidale Kieselsäure, mit einer Primärpartikelgröße, jeweils kleiner als 500 nm. enthalten sind, bei dem eine Oberflächenbehandlung der Partikel eines gebildeten Hydrogeles durch Reaktion mit Silanen, Polysiloxanen, Silikonharzemulsionen oder Fluorkohlenstoffsilanen, derivatisierten Fluorkohlenstoffverbindungen mit Phosphat-, Sulfat- oder quartären Ammoniumverbindungen oder Mischungen davon, durchgeführt wird.

7. Verfahren nach Anspruch 6,
**dadurch gekennzeichnet, dass** für die Reaktion zur Oberflächenbehandlung ein alkalischer Katalysator verwendet wird.

8. Verfahren nach Anspruch 7, **dadurch gekennzeichnet, dass** als Katalysator wasserlösliche Silikonate, Alkalisilikate oder Alkalioxide verwendet werden.

9. Verfahren nach Anspruch 8, **dadurch gekennzeichnet, dass** als Katalysator Methylsilikonat verwendet wird.

10. Verfahren nach einem der Ansprüche 6 bis 9, **dadurch gekennzeichnet, dass** ein Masseverhältnis von synthetischem Schichtsilikat und kolloidaler Kieselsäure zu Silikonharzemulsion von 1:20 bis 1:1 eingehalten wird.

11. Verfahren nach einem der Ansprüche 6 bis 10, **dadurch gekennzeichnet, dass** ein Masseverhältnis von alkalischem Katalysator zu Silikonharzemulsion von 1:10 bis 1:2 eingehalten wird.

12. Verfahren nach einem der Ansprüche 6 bis 11, **dadurch gekennzeichnet, dass** die Oberflächenbehandlung im Temperaturbereich von 30 bis 50 °C über mehrere Tage durchgeführt wird.

13. Verfahren nach einem der Ansprüche 6 bis 12, **dadurch gekennzeichnet, dass** ein Masseanteil an organischem Bindemittel eingesetzt wird, mit dem der Masseanteil der Silikonharzemulsion nicht überschritten wird.

14. Verwendung eines Beschichtungsmaterials nach einem der Ansprüche 1 bis 5, als transparente oder eingefärbte schmutz- und wasserabweisende Schutzschicht auf unbeschichteten und/oder grundierten Baustoffoberflächen.

15. Verwendung eines Beschichtungsmaterials nach einem der Ansprüche 1 bis 5, als schmutz- und wasserabweisende Schutzschicht, als Abschlussbeschichtung auf mineralisch, kunstharz-, naturharz-, kunststoffgebundenen Untergründen, Metall, Holz oder Kunststoff.

## Claims

1. Aqueous coating material with dirt and water repellent effect, containing synthetic layer silicates and colloidal silicic acid with primary particle sizes respectively less than 500 nm, **characterised in that** the colloidally distributed particles are hydrophobic and/or oleophobic at their surfaces.

2. Coating material according to Claim 1, **characterised in that** the primary particle size is respectively less than 200 nm.

3. Coating material according to Claim 1 or 2, **characterised in that** the primary particle size lies in the region between 5 and 50 nm.

4. Coating material according to one of Claims 1 to 3, **characterised in that** it additionally contains an organic bonding agent.

5. Coating material according to one of Claims 1 to 4, **characterised in that** it additionally contains fungicides, flame retardent agents, dyes, pigments and/or filler substances, disperging and bonding agaents, de-foaming agents, thickeners, solvents and emulsifiers.

6. Method of producing an aqueous dirt and water repellent coating material containing synthetic layer silicates and colloidal acidic acid of a primary particle size of respectively less than 500 nm, wherein surface treatment of the particles of a formed hydrogel is carried out by reaction with silanes, polysiloxanes, silicon resin emulsions or fluor carbon silanes, derivatised fluor carbon composites with phosphate, sulphate or quartary ammonium compounds or mixtures thereof.

7. Method according to Claim 6, **characterised in that** for the surface treatment is used an alkaline catalyst for a reaction.

8. Method according to Claim 7, **characterised in that** water soluble siliconates, alkaline silicates or alkaline oxides are used as catalyst.

9. Method according to Claim 8, **characterised in that** methyl siliconate is used as catalyst.

10. Method according to one of Claims 6 to 9, **characterised in that** a mass ratio of synthetic layer silicate and colloidal acidic acid relative to silicon resin emulsion of between 1:20 and 1:1 is maintained.

11. Method according to one of Claims 6 to 10, **characterised in that** a mass ratio of alkaline catalyst and silicon resin emulsion of between 1:10 and 1:2 is maintained.

12. Method according to one of Claims 6 to 11, **characterised in that** the surface treatment is carried out over several days in a temperature range between 30 and 50°C.

13. Method according to one of Claims 6 to 12, **characterised in that** a mass proportion of organic bonding agents is used without exceeding the mass proportion of the silicon resin emulsion.

14. Use of a coating material according to one of Claims 1 to 5 as transparent or dyed dirt and water repellent protective layer on uncoated and/or primed building material surfaces.

15. Use of a coating material according to one of Claims 1 to 5 as dirt and water repellent protective layer, as sealing coat on mineral, synthetic resin, natural resin, plastic-bound bases, metal, wood or plastic material.

## Revendications

1. Matériau de revêtement aqueux, présentant un effet antisalissure et hydrofuge, qui contient des silicates stratifiés synthétiques et de l'acide silicique colloïdal, ayant des tailles de particules primaires respectivement inférieures à 500 nm,
**caractérisé en ce que** les particules réparties de manière colloïdale, au niveau de leur surface, sont rendues imperméables à l'eau et / ou à l'huile.

2. Matériau de revêtement selon la revendication 1, **caractérisé en ce que** la taille des particules primaires est respectivement inférieure à 200 nm.

3. Matériau de revêtement selon l'une quelconque des revendications 1 ou 2, **caractérisé en ce que** la taille des particules primaires se situe dans le domaine allant de 5 à 50 nm.

4. Matériau de revêtement selon l'une quelconque des revendications 1 à 3, **caractérisé en ce qu'**il contient, en outre, un liant organique.

5. Matériau de revêtement selon l'une quelconque des revendications 1 à 4, **caractérisé en ce qu'**il comprend, en outre, des fongicides, ignifugeants, colorants, pigments et / ou des charge, agents dispersants et mouillants, antimoussants, épaississants, solvants et émulsifiants.

6. Procédé permettant de fabriquer un matériau de revêtement aqueux, à effet antisalissure et hydrofuge, qui contient des silicates stratifiés synthétiques et de l'acide silicique colloïdal ayant des tailles de particules primaires respectivement inférieures à 500 nm, dans lequel est réalisé un traitement de surface des particules d'un hydrogel formé par réaction avec des silanes, polysiloxanes, émulsions de résine silicone ou silanes fluorocarbonés, composés de fluorocarbones dérivatisés avec des composés d'ammonium phosphatés, sulfatés ou quaternaires, ou des mélanges de ceux-ci.

7. Procédé selon la revendication 6, caracténsé en ce que, pour la réaction permettant le traitement de surface, on utilise un catalyseur alcalin.

8. Procédé selon la revendication 7, **caractérisé en ce que**, comme catalyseur, on utilise des silicates alcalins ou oxydes alcalins ou siliconates solubles dans l'eau.

9. Procédé selon la revendication 8, **caractérisé en ce que**, comme catalyseur, on utilise du méthylsiliconate.

10. Procédé selon l'une quelconque des revendications 6 à 9, **caractérisé en ce que** le rapport en masse du silicate stratifié synthétique et de l'acide silicique colloïdal par rapport à l'émulsion de résine silicone va de 1/20 à 1/1.

11. Procédé selon l'une quelconque des revendications 6 à 10, **caractérisé en ce que** le rapport en masse entre le catalyseur alcalin et l'émulsion de résine silicone va de 1/10 à 1/2.

12. Procédé selon l'une quelconque des revendications 6 à 11, **caractérisé en ce que** traitement de surface est réalisé dans une plage de températures allant de 30 à 50° C pendant plusieurs jours.

13. Procédé selon l'une quelconque des revendications 6 à 12, **caractérisé en ce qu'**on utilise une teneur en masse de liant organique, qui ne dépasse pas la teneur en masse de l'émulsion de résine silicone.

14. Utilisation d'un matériau de revêtement selon l'une quelconque des revendications 1 à 5, comme couche protectrice antisalissure et hydrofuge, transparente ou teintée, sur des surfaces de matériaux de construction non revêtues et / ou apprêtées.

15. Utilisation d'un matériau de revêtement selon l'une quelconque des revendications 1 à 5, comme couche protectrice antisalissure et hydrofuge, comme revêtement final de substructures métal, bois, ou matières plastiques, associés à des minéraux, de la résine artificielle, résine naturelle, matière plastique.
